# EUROPEAN PATENT SPECIFICATION

(11) **EP 3 258 066 B1**
(45) Date of publication and mention of the grant of the patent: **21.07.2021**
(21) Application number: 16205566.9
(22) Date of filing: 20.12.2016
(51) Int. Cl.: F01D 9/02, F01D 25/12, F23R 3/00, F23R 3/04

(54) **AIR FLOW GUIDE CAP FOR A COMBUSTION DUCT OF A GAS TURBINE ENGINE**
LUFTSTRÖMUNGSFÜHRUNGSKAPPE FÜR EIN BRENNERROHR EINES GASTURBINENTRIEBWERKS
BOUCHON DE GUIDE DE FLUX D'AIR POUR UN CONDUIT DE COMBUSTION D'UN MOTEUR À TURBINE À GAZ

(30) Priority: 16.06.2016 KR 20160075247
(43) Date of publication of application: 20.12.2017
(73) Proprietor: Doosan Heavy Industries & Construction Co., Ltd., Gyeongsangnam-do, 51711 (KR)
(72) Inventor: Shim, Youngsam, 46017 Busan (KR); Lee, Donggon, 21384 Incheon (KR)
(74) Representative: Ter Meer Steinmeister & Partner

(56) References cited:
- EP-A1- 2 889 466
- EP-A2- 2 141 329
- EP-A2- 2 479 384
- GB-A- 685 068
- GB-A- 2 492 374
- US-A- 2 841 958
- US-A- 2 993 337
- US-A- 3 581 492
- US-A- 3 606 569
- US-A- 4 133 633
- US-A1- 2009 145 099
- US-A1- 2010 089 468
- US-A1- 2010 251 723
- US-A1- 2010 269 513
- US-A1- 2012 247 112
- US-A1- 2013 011 267
- US-A1- 2016 069 273
- US-B1- 6 494 044

## Description

### BACKGROUND OF THE INVENTION

### Field of the Invention

The present invention relates to an air flow guide cap for inducing an air flow into a through hole of a combustion duct, and more particularly, to an air flow guide cap, and to a combustion duct of a gas turbine engine including the air flow guide cap.

### Background Art

A gas turbine engine is a rotary type heat engine which actuates a turbine with combustion gas of high-temperature and high-pressure. In general, the gas turbine engine incudes a compressor, a burner and a turbine, and generates expanding combustion gas of high-temperature is made when air compressed in the compressor is mixed and burns together with fuel, and rotates the turbine using power of the combustion gas so as to obtain driving power.

In order to transmit the combustion gas of high-temperature made in the burner to the turbine, a duct structure is required, and such a duct structure is called a combustion duct assembly. The combustion duct assembly generally includes: a liner abutting on the burner; a transition piece connected with the liner; and a sleeve surrounding the liner and the transition piece.

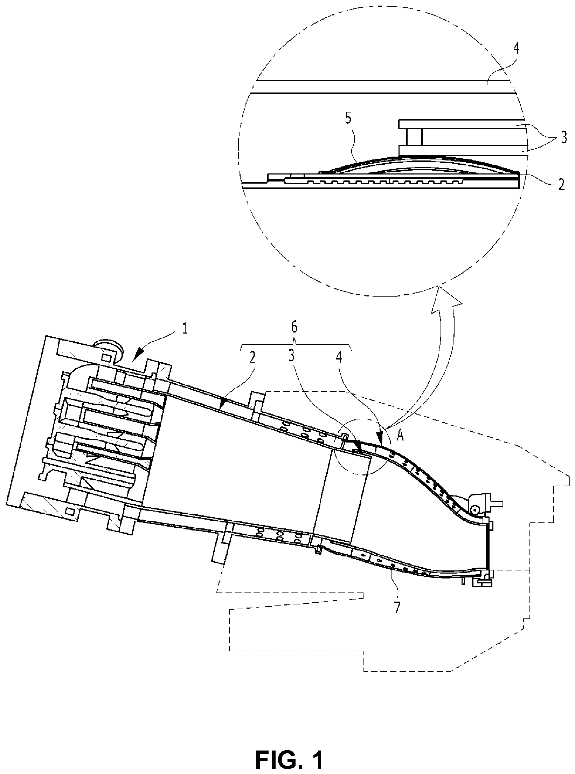

Referring to FIG. 1, an exemplary combustion duct assembly 6 will be described in more detail. The burner 1 is arranged on the upstream side of the liner 2, and an annular spring seal 5 which is outwardly convex is attached on the outer face of the downstream side of the liner 2 connected with the transition piece 3. The annular spring seal 5 is generally called a 'hula seal'. Moreover, the transition piece 3 has a double tube structure including: an inner wall which resiliently gets in contact with the convex part of the spring seal 5 attached to the downstream side of the liner 2; and an outer wall surrounding the inner wall. Therefore, the liner 2 and the transition piece 3 are connected to each other to accept mutually while sliding through a medium of elasticity of the spring seal 5 even though there occurs thermal deformation by the combustion gas of high-temperature.

However, the combustion duct assembly 6 requires proper cooling because it is a path for a flow of the combustion gas of high-temperature. For this, a housing of the gas turbine is fully filled with some of the air highly compressed in the compressor (not shown), and a plurality of through holes 7 are formed in the outer wall of the transition piece 3 and the sleeve 4 surrounding the liner 2 so that compressed air is induced from the outer surface of the sleeve 4 toward the transition piece 3. The air induced into the sleeve 4 cools the transition piece 3 and the liner 2 while ascending toward the burner 1, and finally, enters the burner 1 and is mixed with fuel to be burned.

In order to properly cool the liner 2 and the transition piece 3 of high-temperature by compressed air, first of all, lots of air must be induced through the through holes 7 formed in the sleeve 4. For this, various members for inducing an air flow into the through holes are mounted around the through holes 7 of the sleeve 4.

The cited reference 1 discloses a scoop 8 as air inducing means. The scoop 8 has the shape of the tool for scooping up ice cream, and has a one-fourth globular shape which is formed when a hemisphere is cut in half and then is cut again in half. The diameter of the scoop 8 is slightly larger than the diameter of the through hole 7 of the sleeve 4. When such a scoop 8 is joined along the circumference of the through hole 7 to surround about half of the through hole, the air passing around the through hole 7 is caught to the scoop 8 and goes into the through hole 7. Therefore, the scoop 8 can function to increase the air volume going into the sleeve 4.

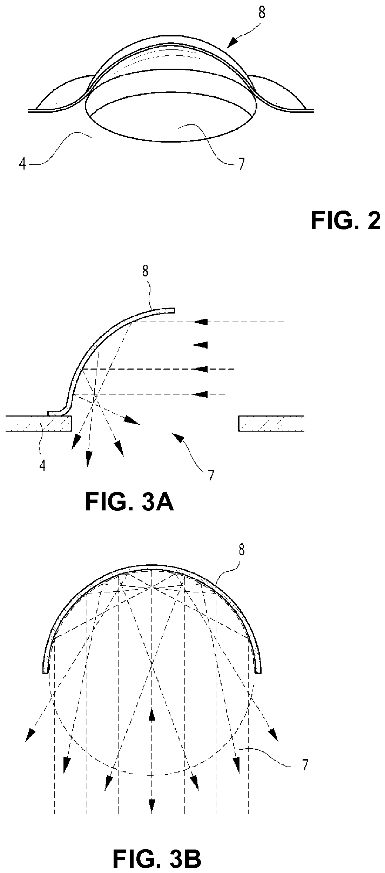

However, such an effect to increase the air volume by the scoop having the shape illustrated in FIG. 2 reaches the limit and it is insufficient to endure a combustion heat value getting higher together with an increase in output of the gas turbine. Therefore, it is necessary to improve the scoop.

### CITED REFERENCES

### Patent Documents

Patent Reference 1: U.S. Patent No. 6,494,044 (December 17, 2002)

GB 685 068 A describes a combustion chamber for gas turbines. The combustion chamber has dilution air holes which are arranged in five staggered rows, wherein the holes in the row are rectangular in shape and are provided with chutes. These chutes give the air entering the holes a swirling motion about the axis of the tube.

EP 2 889 466 A1 discloses air intake devices. A trapezoidal recessed zone is pressed into a metal sheet.

US 2 993 337 A presenting a turbine combustor, US 3 581 492 A presenting a gas turbine combustor, US 6 494 044 B1 presenting aerodynamic devices for enhancing sidepanel cooling on an impingement cooled transition duct and related method, US 2 841 958 A presenting a combustion system of the kind comprising an outer air casing containing a flame compartment for use in gas turbine engines and ram jet engines, EP 2 141 329 A2 presenting an impingement cooling device, US 4 133 633 A presenting combustion chamber for gas turbine engines, and EP 2 479 384 A presenting a mateface cooling feather seal assembly - disclose relevant prior art.

Furthermore, US 2012/0247112, US 2013/0011267, US 2010/0269513, US 2009/0145099, US 3 606 569, US 2010/0089468, US 2016/0069273, US 2010/0251723) and GB 2 492 374 - also disclose relevant prior art.

### SUMMARY OF THE INVENTION

Accordingly, the present invention has been made in view of the above-mentioned problems occurring in the prior art, and it is an object of the present invention to provide a combustion duct of a gas turbine engine including an air flow guide cap of a new form which can increase an inflow amount of compressed air going into through holes formed in a sleeve.

The object is solved by the features of the independent claim. Preferred embodiments are given in the dependent claims.

To accomplish the above object, according to the present invention, there is provided a combustion duct of a gas turbine engine including a plurality of air flow guide caps for inducing an air flow into through holes formed in the floor, each air flow guide cap including: an upper surface upwardly inclined relative to a horizontal plane; and a wall surface downwardly extending along edges of the upper surface except the edge adjacent to an air inlet.

An edge of the rear side at the opposite side of the inlet of the upper surface is in the form of a semicircle.

According to a preferred embodiment, edges of the wall surface extending from both ends of the edge at the inlet of the upper surface are formed to be inclined inwardly.

Here, the upper surface is formed to have the size that the through hole is located inside an orthogonal projection relative to the horizontal plane of the upper surface.

Furthermore, according to the present invention, each of the air flow guide caps further include a protrusion member which downwardly extends from the edge of the rear side at the opposite side of the inlet of the wall surface and is inserted into the through hole.

According to a preferred embodiment, the protrusion member gets in contact with the inner circumferential surface of the through hole, and for this, the protrusion member is in the form of a pipe or in the form that some of a pipe is cut.

The present invention provides a combustion duct including: a combustion duct of a gas turbine in which air flows on the surface and which has a plurality of through holes for inducing air; and a plurality of air flow guide caps each of which includes an upper surface upwardly inclined relative to a horizontal plane and a wall surface downwardly extending along edges of the upper surface except the edge adjacent to an air inlet, wherein the air flow guide caps are combined on the combustion duct to surround the through holes one by one.

According to a preferred embodiment, the air flow guide caps arranged in the direction of the air flow are gradually increased in height toward the downstream side of the air flow.

The combustion duct is a sleeve.

As described above, the air flow guide caps are advantageous in securing a flow rate of cooling air due to an increase of a cross-sectional area of the inlet because the inlet through which air is induced is inclined upwardly, and is easy to induce the air flow in the vertical direction to pass through the through hole because the upper surface is inclined toward the through hole.

Furthermore, because the air flow guide caps are formed as long as the upper surface can cover all of the through holes, turbulence is not generated at the inlet zone of the through hole so that a stable air flow is formed.

Additionally, because the air flow guide caps further include the protrusion member which is inserted into the through hole, the air flow guide cap can be arranged and combined at the correct position relative to the through hole and guide the vertical air flow into the depth of the combustion duct.

In addition, the present invention can provide uniform cooling effect throughout the entire of the combustion duct without unequal distribution when the heights of the air flow guide caps arrayed are gradually increased according to the air flow.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a view showing a general structure of a combustion duct assembly of a gas turbine engine;
FIG. 2 is a view showing a scoop disposed on a conventional combustion duct;
FIG. 3 is a mimetic diagram showing a flow of air induced into the scoop of FIG. 2;
FIG. 4 is a perspective view showing an air flow guide cap;
FIG. 5 is a side sectional view of the air flow guide cap of FIG. 4;
FIG. 6a, 6b are perspective views of air flow guide cap embodiments according to the present invention; and
FIG. 7a, 7b are views showing a state where the air flow guide cap is combined to a sleeve which is a combustion duct.

### DETAILED DESCRIPTION OF THE PREFERRED EMBODIMENT

Hereinafter, the present disclosure will be described in more detail with reference to the embodiments and examples.

In describing the present invention, detailed description of relevant known configuration will be omitted if it is determined that such description may make the substance of the present invention unclear. In assigning reference numerals to elements in each drawing, it shall be noted that like elements have like reference numerals as much as possible even if illustrated in different drawings. In the drawings, thicknesses of lines and sizes of constituent elements may be exaggerated for clarity and convenience in explanation.

Furthermore, in describing elements of the present invention, terms such as first, second A, B, (a), (b) and others may be used. Such terms are used only for purposes of distinguishing an element from other element, but do not limit the substance of the element, sequence or order. If it is stated that a certain element is "connected", "coupled" or "contacts" to another element, it should be understand that the certain element may be directly connected or coupled to the another element, but also another element may be "connected", "coupled" or "contacts" to such elements.

FIGS. 3(a) and (b) are respectively a side view and a plan view of the conventional scoop 8 illustrated in FIG. 2.

As illustrated in FIG. 3, in case of the conventional scoop 8 which has the one-fourth spherical shape, because reflection angles of air flows colliding against the spherical surface are all different according to positions, the air flows may overlap each other and some of the air flows may return out of the through hole 7. Such complicated collision of the air finally makes irregular turbulence at an inlet area of the through hole 7, and such turbulence hinders a smooth flow of the air into the through hole 7. Additionally, turbulence made at the inlet area of the through hole 7 hinders also a flow of the following air. In order to solve the above problem, if pressure of the compressed air is increased, the velocity of the air is also increased and Reynolds number which becomes the measure of turbulence formation is also increased.

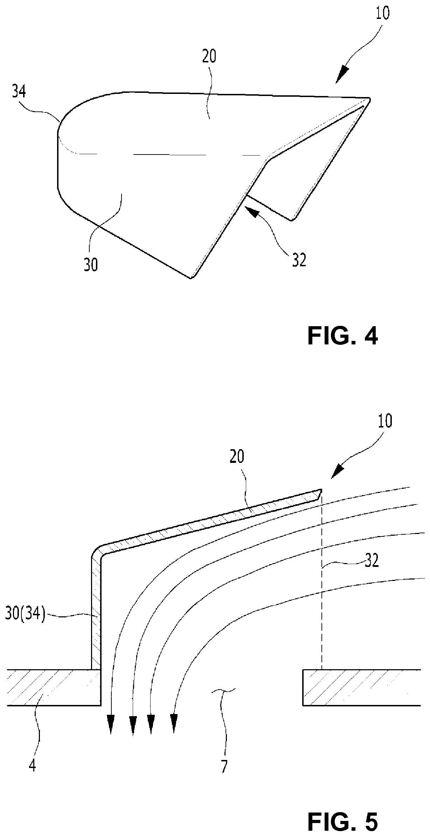

The present invention has been invented in order to solve the structural problem of the conventional scoop 8. Now, referring to FIGS. 4 and 5, the air flow guide cap 10 will be described.

Like the functions of the conventional scoop 8, the present invention relates to a combustion duct including an air flow guide cap 10 for inducing a flow of air flowing along the surface of the sleeve to the through hole 7 toward the floor. Therefore, the air flow guide cap 10 is arranged and combined to surround the through hole 7 such that the through hole 7 is located inside the air flow guide cap 10.

Each of the air flow guide caps 10 includes: an upper surface 20 upwardly inclined relative to a horizontal plane; and a wall surface 30 downwardly extending along edges of the upper surface 20 except the edge adjacent to an air inlet 32. That is, the air flow guide caps 10 have the structure that all sides except the inlet 32 and the bottom side are blocked.

The air flow guide caps 10 may have the size that the through hole 7 of the floor is located inside an orthogonal projection of the upper surface 20 relative to the horizontal plane. In other words, the entire of the through hole 7 may be contained in the air flow guide cap 10, and it is different from the structure of the conventional scoop 8 of the one-fourth spherical shape that surrounds just half of the through hole 7.

Such an air flow guide cap 10 is advantageous in securing a flow rate of cooling air due to an increase of a cross-sectional area of the inlet because the inlet 32 through which air is induced is inclined upwardly.

Moreover, as shown in FIG. 5, because the upper surface 20 is inclined in the direction of the through hole 7, it is advantageous in inducing the flow of the air induced into the air flow guide cap 10 in the vertical direction to pass through the through hole 7.

Furthermore, because the air flow guide cap 10 is formed as long as the upper surface 20 can cover all of the through holes 7. The air flow guide cap 10 does not generate turbulence at the inlet zone of the through hole 7 and induces formation of a streamline flow that a flow line extends toward the through hole 7.

Therefore, the air flow guide cap 10 has a very suitable structure that air flowing the surface of the combustion duct forms a stable air flow induced into the through hole 7.

Additionally, in case of the upper surface 20 of the air flow guide cap 10, an edge of a rear side 34 on the opposite side of the inlet 32 may be formed in an arc. According to the present invention, the edge is in the form of a semicircle. Therefore, the wall surface 30 is formed to get in contact with the edge of the circular through hole 7, so that the air colliding against the wall surface 30 which is opposed to the inlet 32 can be collected in a convergence direction toward the through hole 7.

In addition, the edge of the wall surface 30 extending from both ends of the edge of the inlet side 32 of the upper surface 20 is formed to be inclined inwardly. That is, as shown in FIG. 4, the air flow guide cap 10 is formed to have an open side which is slightly open toward both sides of the air inlet 32 of the air flow guide cap 10.

As shown in FIG. 5, because distribution of the air induced into the through hole 7 mainly leans toward the rear side of the through hole 7, namely, the opposite side of the air induction direction, even though the open sides are formed at both sides of the air inlet 32, there is little fear that the air induced into the air flow guide cap 10 gets out of the cap. So, both sides of the inlet 32 are slightly open in order to receive the air somewhat slantly flowing relative to the length direction of the air flow guide cap 10.

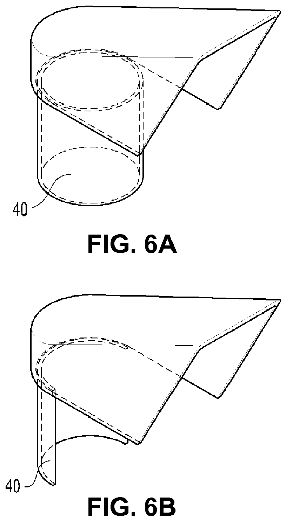

In the meantime, according to the present invention, each of the air flow guide caps 10 further includes a protrusion member 40 which downwardly extends from the edge of the rear side 34 at the opposite side of the inlet 32 of the wall surface 30 and is inserted into the through hole 7, and it is illustrated in FIG. 6.

The protrusion member 40 is joined to the inside of the rear side 34 at the opposite side of the inlet 34 of the air flow guide cap 10 by welding or others using a pipe or a component obtained by cutting some of the pipe, or is made integrally with the air flow guide cap 10 through press or bending.

The protrusion member 40 is inserted into the through hole 7. When the air flow guide cap 10 is joined to the through hole 7, only the upper surface 20 and the wall surface 30 of the air flow guide cap 10 are seen from the outside and the protrusion member 40 which is inserted into the through hole is not exposed to the outside. Particularly, in order to get in contact with the inner circumferential surface of the through hole 7, preferably, the protrusion member 40 has an outer diameter corresponding to the diameter of the through hole 7.

Such a protrusion member 40 has two functions as follows.

First, when the protrusion member 40 of the air flow guide cap 10 is inserted into the through hole 7, a worker can exactly and conveniently carry out adjustment work of the air flow guide cap 10 relative to the through hole 7 without any error. Once the protrusion member 40 is inserted into the through hole 7, the worker just adjusts the direction of the inlet of the air flow guide cap 10 to fix it through welding. Accordingly, it causes a great improvement in work efficiency in mounting lots of air flow guide caps 10 on the surface of the combustion duct one by one.

Second, the protrusion member 40 guides the vertical air flow going into the through hole 7 into the depth of the combustion duct. In case of the combustion duct assembly 6 illustrated in FIG. 1, the liner 2 and the transition piece 3 in which combustion gas flows at an interval are arranged inside the sleeve 4, and the air passing through the sleeve 4 must cool the liner 2 and the transition piece 3 which are at high temperature. Therefore, the cooling effect is improved considerably when the air adjacent to the surfaces of the liner 2 and the transition piece 3 is induced or discharged through the protrusion member 40.

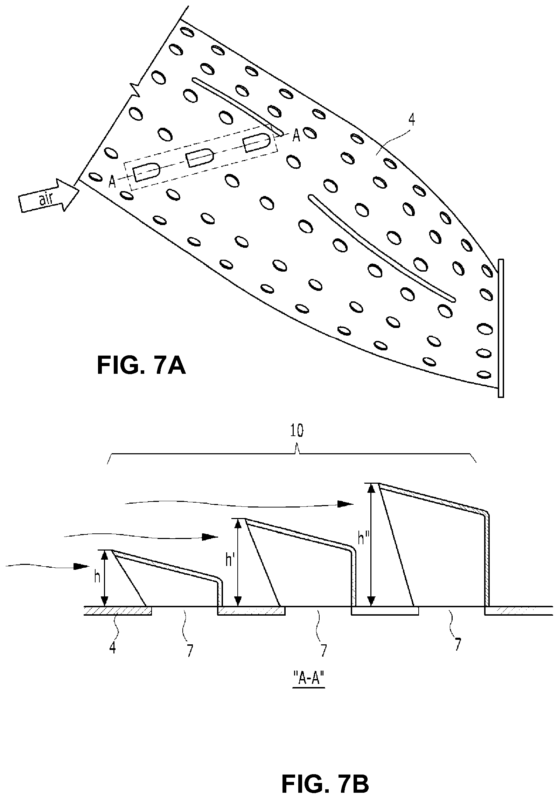

FIG. 7 illustrates the air flow guide cap 10 mounted on the combustion duct. Here, the combustion duct is the sleeve 4.

Compressed air flows on the surface of the sleeve 4, and a plurality of the through holes 7 are formed to induce the air inwardly. The air flow guide caps 10 are arranged and fixed to surround the through holes 7 one by one, and especially, the inlet 32 of the air flow guide cap 10 must be located to be matched to the main flow direction of the air.

The flow of the air flowing on the surface of the sleeve 4 follows a predetermined direction by the designed form and arrangement of the gas turbine. According to the flow direction of the air, lots of air flow guide caps 10 may be arrayed, and as an example, FIG. 7 shows three air flow guide caps 10 indicated by the dashed line.

In this instance, as shown in FIG. 7 taken along the line of "A-A", heights (h, h' and h") of the air flow guide caps 10 arrayed are gradually increased toward the downstream side of the air flow. The reason is that the air flow guide caps 10 of the upstream side may obstruct introduction of the air into the air flow guide caps 10 of the downstream side. As described above, when the heights of the air flow guide caps arrayed are gradually increased according to the air flow, cooling effect is uniformly shown throughout the entire of the combustion duct without unequal distribution.

Here, FIG. 7 shows an example that the air flow guide cap 10 which has no protrusion member 40 is applied, but it will be understood by those of ordinary skill in the art that the air flow guide cap 10 which has the protrusion member 40 of FIG. 6 can be applied in the same way.

## Claims

1. A combustion duct of a gas turbine engine comprising:
a combustion duct formed as a sleeve (4), wherein compressed air flows along an outer surface of the sleeve (4) which has a plurality of circular through holes (7) for inwardly inducing an air flow of the compressed air; and
a plurality of air flow guide caps (10) arranged on the outer surface of the sleeve (4) for inducing the air flow in the vertical direction to pass through the circular through holes (7), wherein the air flow guide caps (10) are combined on the combustion duct and fixed through welding to surround the through holes (7) one by one;
each of the air flow guide caps (10) comprising:
an upper surface (20) upwardly inclined relative to a horizontal plane and toward an air inlet (32), wherein the air inlet (32) of the air flow guide cap (10) is located to be matched to the main flow direction of the compressed air flowing along the outer surface of the sleeve (4); and
a wall surface (30) downwardly extending along edges of the upper surface (20) except the edge adjacent to the air inlet (32), such that all sides of the air flow guide cap (10) except the air inlet (32) and the bottom side are blocked,
**characterized in that** each of the air flow guide caps (10) further comprises:
a protrusion member (40) joined to the inside of a rear side (34) at the opposite side of the air inlet (32) of the air flow guide cap (10) and downwardly extending from a bottom edge of the rear side (34) at the opposite side of the air inlet (32) of the wall surface (30), the protrusion member (40) being inserted into the through hole (7) for guiding the vertical air flow into the depth of the combustion duct;
wherein when the air flow guide caps (10) are joined to the respective through holes (7), only the respective upper surface (20) and the respective wall surface (30) of each air flow guide cap (10) are seen from the outside and the respective protrusion member (40) is not exposed to the outside;
wherein an edge of a rear side (34) at the opposite side of the air inlet (32) of the upper surface (20) of each of the air flow guide caps (10) is in the form of a semicircle, and a bottom edge of the corresponding wall surface (30) downwardly extending from said rear side edge of the upper surface (20) is formed to get in contact with an upper edge of the respective circular through hole (7).

2. The combustion duct according to claim 1, wherein edges of the wall surface (30) extending from both ends of the edge at the air inlet (32) of the upper surface (20) of the air flow guide cap (10) are formed to be inclined inwardly, so as to have open sides which are slightly open toward both sides of the air inlet (32).

3. The combustion duct according to any one of claims 1 to 2, wherein the upper surface (20) is formed to have the size that the through hole (7) is located inside an orthogonal projection relative to the horizontal plane of the upper surface (20).

4. The combustion duct according to any one of claims 1 to 3, wherein the protrusion member (40) gets in contact with the inner circumferential surface of the through hole (7).

5. The combustion duct according to any one of claims 1 to 4, wherein the protrusion member (40) is in the form of a pipe.

6. The combustion duct according to any one of claims 1 to 4, wherein the protrusion member (40) is in the form that some of a pipe is cut.

7. The combustion duct according to any one of claims 1 to 6, wherein the air flow guide caps (10) arrayed in the direction of the compressed air flow are gradually increased in height (h, h', h") toward the downstream side of the air flow.

## Patentansprüche

1. Verbrennungskanal einer Gasturbinenkraftmaschine, der Folgendes umfasst:
einen Verbrennungskanal, der als eine Hülse (4) gebildet ist, wobei Druckluft entlang einer Außenfläche der Hülse (4), die mehrere kreisförmige Durchgangslöcher (7) zum Einleiten eines Druckluftstroms nach innen besitzt, strömt; und
mehrere Luftstromführungskappen (10), die an der Außenfläche der Hülse (4) angeordnet sind, um den Luftstrom in der vertikalen Richtung derart einzuleiten, dass er durch die kreisförmigen Durchgangslöcher (7) geleitet wird, wobei die Luftstromführungskappen (10) nacheinander am Verbrennungskanal verbunden und durch Schweißen derart befestigt sind, dass sie Durchgangslöcher (7) umgeben; wobei
jede Luftstromführungskappe (10) Folgendes umfasst:
eine Oberseite (20), die in Bezug auf eine Horizontalebene nach oben und zu einem Lufteinlass (32) geneigt ist, wobei der Lufteinlass (32) der Luftstromführungskappe (10) derart verortet ist, dass er mit der Hauptströmungsrichtung der Druckluft, die entlang der Außenfläche der Hülse (4) strömt, übereinstimmt; und
eine Wandfläche (30), die sich entlang von Kanten der Oberseite (20) außer der zum Lufteinlass (32) benachbarten Kante derart nach unten erstreckt, dass alle Seiten der Luftstromführungskappe (10) mit Ausnahme des Lufteinlasses (32) und der Unterseite blockiert sind,
**dadurch gekennzeichnet, dass** jede Luftstromführungskappe (10) ferner Folgendes umfasst:
ein Vorsprungselement (40), das mit dem Inneren einer Rückseite (34) auf der dem Lufteinlass (32) gegenüberliegenden Seite der Luftstromführungskappe (10) verbunden ist und sich von einer Unterkante der Rückseite (34) auf der dem Lufteinlass (32) gegenüberliegenden Seite der Wandfläche (30) nach unten erstreckt, wobei das Vorsprungselement (40) in das Durchgangsloch (7) eingesetzt ist, um den vertikalen Luftstrom in die Tiefe des Verbrennungskanals zu leiten; wobei
dann, wenn die Luftstromführungskappen (10) mit den jeweiligen Durchgangslöchern (7) verbunden sind, lediglich die jeweilige Oberseite (20) und die jeweilige Wandfläche (30) jeder Luftstromführungskappe (10) von außen sichtbar sind und das jeweilige Vorsprungselement (40) nicht nach außen freiliegt; und
eine Kante einer Rückseite (34) auf der dem Lufteinlass (32) gegenüberliegenden Seite der Oberseite (20) jeder Luftstromführungskappe (10) in Form eines Halbkreises vorliegt und eine Unterkante der entsprechenden Wandfläche (30), die sich von der Rückseitenkante der Oberseite (20) nach unten erstreckt, derart gebildet ist, dass sie mit einer Oberkante des jeweiligen kreisförmigen Durchgangslochs (7) in Kontakt gelangt.

2. Verbrennungskanal nach Anspruch 1, wobei Kanten der Wandfläche (30), die sich von beiden Enden der Kante beim Lufteinlass (32) der Oberseite (20) der Luftstromführungskappe (10) erstrecken, derart gebildet sind, dass sie nach innen geneigt sind, um offene Seiten zu besitzen, die zu beiden Seiten des Lufteinlasses (32) leicht offen sind.

3. Verbrennungskanal nach einem der Ansprüche 1 bis 2, wobei die Oberseite (20) derart gebildet ist, dass sie das Format aufweist, dass das Durchgangsloch (7) in einem in Bezug auf die Horizontalebene der Oberseite (20) senkrechten Vorsprung verortet ist.

4. Verbrennungskanal nach einem der Ansprüche 1 bis 3, wobei das Vorsprungselement (40) in Kontakt mit der Innenumfangsfläche des Durchgangslochs (7) gelangt.

5. Verbrennungskanal nach einem der Ansprüche 1 bis 4, wobei das Vorsprungselement (40) in Form eines Rohres vorliegt.

6. Verbrennungskanal nach einem der Ansprüche 1 bis 4, wobei das Vorsprungselement (40) in der Form vorliegt, dass ein Teil eines Rohres beschnitten ist.

7. Verbrennungskanal nach einem der Ansprüche 1 bis 6, wobei die Höhe (h, h', h") der Luftstromführungskappen (10), die in Richtung des Druckluftstroms angeordnet sind, zur stromabwärts des Luftstroms liegenden Seite allmählich zunimmt.

## Revendications

1. Conduit de combustion d'un moteur de turbine à gaz, comportant :
un conduit de combustion formé comme un manchon (4), dans lequel de l'air comprimé s'écoule le long d'une surface extérieure du manchon (4) qui a une pluralité de trous traversants circulaires (7) pour induire un écoulement d'air de l'air comprimé vers l'intérieur ; et
une pluralité de coiffes de guidage d'écoulement d'air (10) agencées sur la surface extérieure du manchon (4) pour induire l'écoulement d'air dans la direction verticale pour passer à travers les trous traversants circulaires (7), dans lequel les coiffes de guidage d'écoulement d'air (10) sont combinées sur le conduit de combustion et fixées par soudage pour entourer les trous traversants (7) un à un ;
chacune des coiffes de guidage d'écoulement d'air (10) comportant :
une surface supérieure (20) inclinée vers le haut par rapport à un plan horizontal et vers une entrée d'air (32), dans lequel l'entrée d'air (32) de la coiffe de guidage d'écoulement d'air (10) est positionnée pour correspondre à la direction d'écoulement principal de l'air comprimé s'écoulant le long de la surface extérieure du manchon (4) ; et
une surface de paroi (30) s'étendant vers le bas le long de bords de la surface supérieure (20) à l'exception du bord adjacent à l'entrée d'air (32), de telle sorte que tous les côtés de la coiffe de guidage d'écoulement d'air (10), à l'exception de l'entrée d'air (32) et du côté inférieur, sont bloqués,
**caractérisé en ce que** chacune des coiffes de guidage d'écoulement d'air (10) comporte en outre :
un élément de saillie (40) assemblé à l'intérieur d'un côté arrière (34) sur le côté opposé de l'entrée d'air (32) de la coiffe de guidage d'écoulement d'air (10) et s'étendant vers le bas à partir d'un bord inférieur du côté arrière (34) sur le côté opposé de l'entrée d'air (32) de la surface de paroi (30), l'élément de saillie (40) étant inséré dans le trou traversant (7) pour guider l'écoulement d'air vertical dans la profondeur du conduit de combustion ;
dans lequel lorsque les coiffes de guidage d'écoulement d'air (10) sont assemblées aux trous traversants (7) respectifs, seule la surface supérieure (20) respective et la surface de paroi (30) respective de chaque coiffe de guidage d'écoulement d'air (10) sont vues depuis l'extérieur et l'élément de saillie (40) respectif n'est pas exposé à l'extérieur ;
dans lequel un bord d'un côté arrière (34) sur le côté opposé de l'entrée d'air (32) de la surface supérieure (20) de chacune des coiffes de guidage d'écoulement d'air (10) a la forme d'un demi-cercle, et un bord inférieur de la surface de paroi (30) correspondante s'étendant vers le bas à partir dudit bord latéral arrière de la surface supérieure (20) est formé pour venir en contact avec un bord supérieur du trou traversant circulaire (7) respectif.

2. Conduit de combustion selon la revendication 1, dans lequel des bords de la surface de paroi (30) s'étendant à partir des deux extrémités du bord au niveau de l'entrée d'air (32) de la surface supérieure (20) de la coiffe de guidage d'écoulement d'air (10) sont formés pour être inclinés vers l'intérieur, de manière à avoir des côtés ouverts qui sont légèrement ouverts vers les deux côtés de l'entrée d'air (32).

3. Conduit de combustion selon l'une quelconque des revendications 1 à 2, dans lequel la surface supérieure (20) est formée pour avoir une taille telle que le trou traversant (7) est situé à l'intérieur d'une projection orthogonale par rapport au plan horizontal de la surface supérieure (20).

4. Conduit de combustion selon l'une quelconque des revendications 1 à 3, dans lequel l'élément de saillie (40) vient en contact avec la surface circonférentielle intérieure du trou traversant (7).

5. Conduit de combustion selon l'une quelconque des revendications 1 à 4, dans lequel l'élément de saillie (40) a la forme d'un tuyau.

6. Conduit de combustion selon l'une quelconque des revendications 1 à 4, dans lequel l'élément de saillie (40) a une forme telle qu'une partie d'un tuyau est découpée.

7. Conduit de combustion selon l'une quelconque des revendications 1 à 6, dans lequel les coiffes de guidage d'écoulement d'air (40) disposées en rangée dans la direction de l'écoulement d'air comprimé augmentent graduellement en hauteur (h, h', h") vers le côté aval de l'écoulement d'air.
